# FASCICULE DE BREVET EUROPEEN

(11) **EP 0 429 113 B1**
(45) Date de publication et mention de la délivrance du brevet: **15.06.1994**
(21) Numéro de dépôt: 90202932.1
(22) Date de dépôt: 06.11.1990
(51) Int. Cl.: A63F 9/00, G09B 1/20

(54) **Elément pour jeu didactique, et ensemble constitué par ces éléments**
Didaktisches Spielelement und Anordnung von solchen Elementen
Element for didactic game and assembly constituted by such elements

(30) Priorité: 17.11.1989 IT 6801289
(43) Date de publication de la demande: 29.05.1991
(73) Titulaire: ALESSANDRO QUERCETTI & C. Fabbrica Giocattoli Formativi - S.p.A., 10152 Torino (IT)
(72) Inventeur: Quercetti, Alessandro, I-10133 Torino (IT)
(74) Mandataire: Patrito, Pier Franco, Dr. Ing.

(56) Documents cités:
- FR-A- 2 508 329
- US-A- 2 049 178
- US-A- 3 128 100
- US-A- 4 146 978

## Description

La présente invention a pour objet un élément pour jeu didactique, du type capable de montrer plusieurs surfaces portant des représentations différentes, lesquelles peuvent éventuellement être combinées avec les représentations d'autres éléments similaires constituant un ensemble, dans le but de composer des écritures, des images ou similaires.

Le prototype des éléments du genre considéré est constitué par le jeu des ainsi-dits "cubes", comprenant un ensemble d'éléments en forme de cubes chacun desquels est pourvu de six surfaces carrées montrant des représentations différentes qui forment des parties d'images. Les différentes images peuvent être reconstituées en combinant les différents cubes de l'ensemble, disposés et orientés d'une façon appropriée. En vue de la simplicité de leur structure et de leur usage, ces cubes sont adaptés pour des enfants très jeunes, toutefois leur emploi donne lieu à des stimulations modestes, et donc l'intérêt pour ce jeu n'a pas une longue durée.

Un développement de ce jeu, mieux adapté pour offrir un contenu didactique, est constitué par les ainsi-dits "alphabétiers", constitués par des tables comportant un ensemble de mécanismes, chacun desquels normalement montre une représentation, laquelle peut être temporairement remplacée par une ou plusieurs autres représentations en appuyant sur un poussoir. Par exemple, la représentation normalement montrée peut consister en une lettre majuscule de l'alphabet, imprimée sur la surface d'un volet qui se soulève lorsqu'on appuye sur le poussoir correspondant ainsi découvrant la représentation de la même lettre minuscule, ainsi que l'image d'un objet dont le nom commence par la lettre considérée. Le contenu heuristique d'un tel jeu est considérable et, aussi en considération de son caractère mécanique, il offre des stimulations sous un certain point de vue plus grandes que celles des cubes considérés auparavant, toutefois son limite consiste en ce que les représentations montrées par chaque mécanisme élémentaire sont disposées en une position fixe dans l'ensemble, de sorte que chaque représentation fait état à soi et elle ne peut nullement être combinée avec les représentations montrées par les autres mécanismes. De ce fait un alphabétier résulte, sous ce point de vue, inférieur aux simples cubes.

Suivant le document US-A-3,128,100 est connu un jeu didactique avec des éléments capables de montrer plusieurs surfaces comportant des représentations différentes, lesquelles se combinent avec les représentations d'autres éléments similaires constituant dans leur ensemble le jeu, chaque élément comprenant un support, un corps géométrique pivoté sur ledit support et comportant sur sa surface des représentations, et un organe de commande comprenant un poussoir 30, porté par ledit support et capable, lorsqu'il est manoeuvré, d'agir sur ledit corps géométrique en lui imposant une rotation dans un sens préfixé, sur un angle tel à remplacer chaque représentation du corps géométrique par la repésentatione successive, ledit support comprenant une base d'appui, un montant qui s'élève de ladite base et qui sert comme guide pour ledit organe de commande, et une partie servant comme coussinet pour ledit corps géométrique. Les surfaces comportant des représentations sont cylindriques et non disposées sur des surfaces planes, par conséquence elles ne seraient pas bien susceptibles de combiner avec les surfaces des éléments d'autres jeux similaires disposés adjacents, ni d'autre part la structure suivant ledit document permettrait une telle disposition. Les éléments formant le jeu ne pourraient pas être utilisés singulièrement ni groupés d'une façon différente de celle prévue dans la construction du jeu.

Suivant le document US-A-4,146,978 est connu un jeu didactique dans lequel des éléments capables de montrer plusieurs surfaces comportant des représentations différentes, en formant des écritures, sont displacés par action manuelle, sans comporter des organes de commande. Ces éléments ont une section carrée et les représentations adjacentes se disposent sur une surface plane. Aussi dans ce cas, les éléments formant le jeu ne pourraient pas être utilisés singulièrement ni groupés d'une façon différente de celle prévue dans la construction du jeu.

Le but de la présente invention est de réaliser un élément pour jeu didactique, qu'on peut employer singulièrement ou bien en combinaison avec d'autres éléments similaires, lequel d'un côté doit présenter l'intérêt inhérent à un fonctionnement mécanique, comme celui des alphabétiers, et d'autre côté doit aussi offrir la possibilité, caractéristique des cubes, de combiner les représentations de plusieurs éléments qu'on peut disposer à volonté, pour composer une image ou une écriture.

Ce but est atteint, suivant l'invention, par un élément pour jeu didactique, du type capable de montrer plusieurs surfaces comportant des représentations différentes, lesquelles peuvent éventuellement être combinées avec les représentations d'autres éléments similaires constituant un ensemble, dans le but de composer des écritures, des images ou similaires, cet élément comprenant un support un corps géométrique pivoté sur ledit support et comportant sur ses surfaces des représentations, et un organe de commande comprenant un poussoir, porté par ledit support et capable, lorsqu'il est manoeuvré, d'agir sur ledit corps géométrique en lui imposant une rotation dans un sens préfixé, sur un angle tel à remplacer chaque surface du corps géométrique par la surface successive, ledit support comprenant une base d'appui, un montant qui s'élève de ladite base et qui sert comme guide pour ledit organe de commande, et une partie cylindrique servant comme coussinet pour ledit corps géométrique, caractérisé en ce que ladite partie est creuse, et en ce que ledit poussoir est creux, et inséré à glissement sur ledit montant du support, et comporte des moyens de connexion pour un organe intérieur au poussoir opérant sur le corps géométrique et en ce que ledit corps géométrique comporte une partie principale prismatique, de section carrée, et se prolonge, d'un côté de ladite partie principale de section carrée, par une partie substantiellement cylindrique, laquelle constitue un tourillon et se termine par des conformations définissant une partie des éléments d'un mécanisme de commande de la dite rotation et comprenant dans cet ordre une partie à section carrée et un disque coaxiaux, ce disque présentant des saillies sur lesquelles opère ledit organe de telle manière que ce disque constitue une roue à échappement.

Du fait de cette structure, l'usager de l'élément, en manoeuvrant une ou plusieurs fois l'organe de commande, peut porter dans la position d'exhibition l'une quelconque des différentes faces du corps prismatique, lesquelles portent des représentations différentes, et de cette façon il peut choisir la représentation montrée par l'élément parmi les représentations qu'il présente, lesquelles, comme conséquence de la manoeuvre de l'organe de commande, sont montrées en une succession sériale prévoyable. De plus, l'élément lui-même peut être déplacé par rapport aux autres éléments formant un ensemble, de sorte à donner aux différentes représentations des éléments une succession raisonnée, telle par exemple à composer une écriture ou une image. De cette façon, à l'usager du jeu est offert un ensemble de stimulations qui tend à maintenir longtemps l'intérêt, à l'avantage aussi de l'effet didactique.

Avantageusement, l'ensemble des éléments comprend encore un plateau capable de contenir un certain nombre d'éléments, ordonnés par lignes et colonnes, ainsi facilitant un développement rangé de la composition de l'écriture ou de l'image résultant de l'association raisonnée des différents éléments.

Ces caractéristiques et autres et les avantages de l'objet de l'invention ressortiront plus clairement de la suivante description de certaines formes de réalisation, données à titre d'exemples non limitatifs et montrées schématiquement dans les dessins annexés, dans lesquels:
Fig. 1 montre en perspective un élément suivant l'invention, comprenant un corps prismatique de section carrée et un organe de commande à poussoir;
Fig. 2 et Fig. 3 en montrent deux sections longitudinales, respectivement verticale et horizontale;
Fig. 4 montre une section transversale prise en correspondence de l'organe de commande à poussoir, en une forme modifiée ce celui-ci;
Fig. 5 montre une section transversale du corps prismatique portant les représentations;
Fig. 6 montre singulièrement une section de l'organe de commande à poussoir, mettant en évidence les parties constituant les mécanismes destinés à produire la rotation du corps prismatique;
Fig. 7 montre une vue d'en bout du corps prismatique, mettant en évidence les organes destinés à coopérer avec le poussoir pour produire la rotation;
Fig. 8 montre en une vue en plan un plateau qui contient d'une façon ordonnée un certain nombre d'éléments suivant l'invention; et
Fig. 9 en montre une section longitudinale faite suivant la ligne IX-IX de la figure 8.

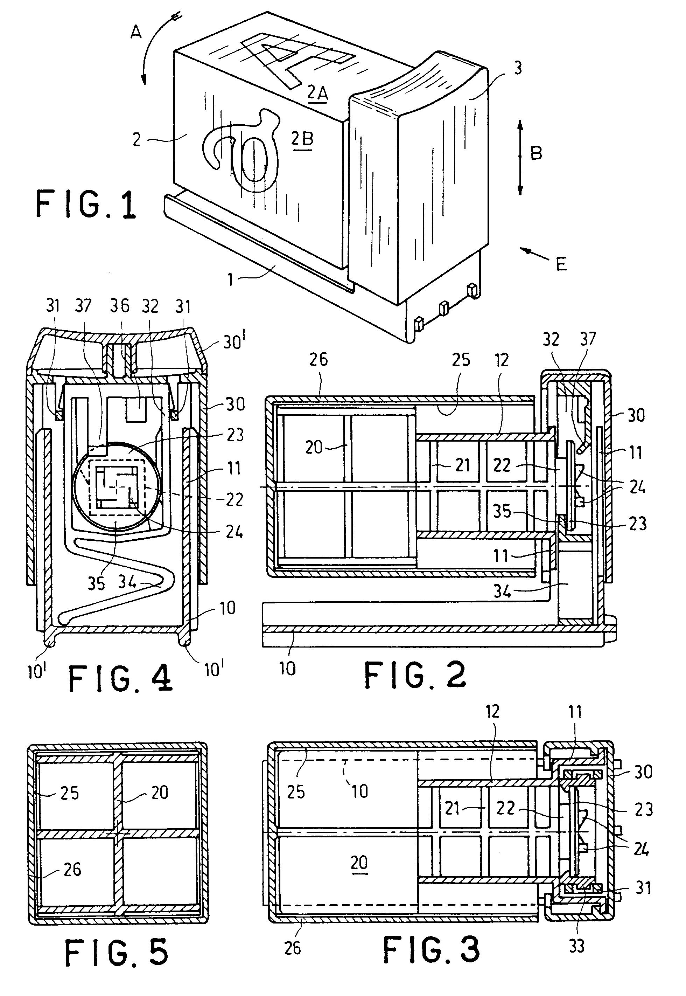

Comme il résulte de la figure 1, un élément suivant l'invention, indiqué dans son ensemble par la référence E, comporte un support, indiqué dans son ensemble par la référence 1, un corps prismatique, indiqué dans son ensemble par la référence 2, et un organe de commande, indiqué dans son ensemble par la référence 3. Dans ce cas, le corps prismatique 2 a une section carrée et il est tourillonné sur le support 1 suivant un axe horizontal de sorte à pouvoir tourner suivant la flèche courbe A, et l'organe de commande 3 est constitué par un poussoir et il est monté sur le support 1 de sorte à pouvoir glisser en direction verticale suivant la flèche double B. Lorsque le support 1 d'un tel élément est appuyé sur un plan approximativement horizontal, la face supérieure 2A du corps prismatique 2 est montrée, c'est à dire qu'elle est en une position bien visible, tandis que les autres faces du corps prismatique, comme la face 2B, peuvent être examinées en manipulant l'élément, mais elles ne se trouvent pas en une position montrée. Dans l'exemple représenté, la face 2A porte la représentation de la lettre majuscule A, tandis que la face 2B porte la représentation de la lettre minuscule a. Des mécanismes décrits plus avant connectent opérativement le poussoir 3 au corps prismatique 2 de manière qu'une pression exercée sur le poussoir 3, en le baissant suivant la flèche B, a pour effet une rotation du corps prismatique 2 sur un quart de tour suivant la flèche A, de sorte que sa face 2A, qui était montrée auparavant, prend la place de la face 2B, tandis que la place précédemment occupée par la face 2A est prise par la face opposée à la face 2B, laquelle donc est montrée. Des moyens élastiques déplacent à nouveau dans sa position de repos le poussoir 3, après que la pression lui appliquée est relâchée.

De cette façon, comme on peut le comprendre, en exerçant une fois, deux fois ou trois fois une pression sur le poussoir 3, on peut porter dans la position montrée l'une quelconque des quatre faces du corps prismatique 2, au lieu de la face 2A qui était montrée auparavant. Sur les faces du corps prismatique 2 on peut appliquer des représentations de tout genre, lesquelles peuvent être des lettres, des numéros, des images complètes ou des parties d'images. Par exemple, les différentes faces du corps prismatique 2 peuvent montrer une lettre majuscule, la même lettre minuscule, l'image d'un objet dont le nom commence par la lettre considérée, et de plus une autre représentation, laquelle peut être en connexion logique avec les précédentes, ou bien ne l'être pas. Les trois premières représentations indiquées autorisent la simulation du fonctionnement d'un élément d'alphabétier, avec l'avantage que la représentation choisie demeure montrée d'une façon non temporaire. Toutefois il est évident que les représentations appliquées aux différentes faces du corps prismatique 2 peuvent aussi être choisies par tout critère différent de celui qu'on a exposé à titre d'exemple. En particulier, une ou plusieurs de ces représentations peuvent constituer des parties d'une image susceptible d'être composée en avoisinant d'une façon appropriée plusieurs éléments, comme on l'expliquera mieux plus avant.

Du point de vue de la construction, faisant référence aux figures 2 à 4, le support indiqué en général par 1 comporte une base d'appui 10, de laquelle s'élève un montant 11 destiné à constituer un guide pour le poussoir 3, et qui s'étend en une partie tubulaire cylindrique horizontale 12 constituant un coussinet pour le corps prismatique 2 qui porte les représentations.

Faisant référence aux figures 2 à 5 et 7, le corps prismatique indiqué en général par 2 comporte d'abord une partie substantiellement cubique 20, ayant de préférence une structure allégée, de laquelle fait saillie une partie substantiellement cylindrique 21, elle aussi de préférence allégée, constituant un tourillon monté dans la partie cylindrique 12 du support 1 de façon telle à pouvoir tourner. Ladite partie cylindrique 21 se termine, à son extrémité opposée à la partie cubique 20, par une section carrée 22 et par un disque 23 sur lequel sont formées des saillies 24 définissant une roue à échappement à quatre positions. Les parties décrites jusqu'ici sont réalisées, de préférence, en matière plastique moulée. Sur la partie substantiellement cubique du corps prismatique 2 est appliqué un élément lamellaire 25, plié de sorte à former un prisme à base carrée, et comportant sur ses faces extérieures les représentations prévues. Cet élément lamellaire 25 peut être constitué, par exemple, par un simple carton rectangulaire imprimé, dans lequel, de préférence, on peut aussi imprimer les lignes de pliage prévues. Sur l'élément lamellaire 25 est inséré un étui 26 de matière transparente, lequel retient en forme et en position correcte l'élément lamellaire 25 sur le corps prismatique 20, tandis que du fait de sa transparence il autorise la vision des représentations imprimées sur l'élément lamellaire 25. L'étui 26 peut être réalisé, de préférence, en une matière plastique transparente moulée.

L'étui creux 26 peut être fixé d'une façon inamovible sur la partie cubique 20 du corps prismatique 2, et dans ce cas l'élément lamellaire 25 est fixe lui-aussi. Alternativement, l'étui creux 26 peut être appliqué d'une façon amovible, par exemple il peut être emporté par glissement de la partie cubique 20 du corps prismatique 2, et dans ce cas l'élément lamellaire 25 peut être emporté et remplacé par un autre, pourvu de représentations différentes.

Faisant référence aux figures 2 à 4 et 6, le poussoir indiqué en général par la référence 3 est constitué par un élément creux 30, conformé de sorte à pouvoir être couplé à glissement sur le montant 11 du support 1, par lequel il est guidé dans son déplacement suivant la flèche B de la figure 1, et comportant à l'intérieur deux oreilles 31 prévues pour recevoir la connexion d'un organe opératif intérieur. L'élément creux 30 est avantageusement réalisé en une matière plastique moulée, de préférence opaque de sorte à cacher les mécanismes intérieurs. Comme le montre la figure 4, il peut être complété à son extrémité supérieure par un élément 30' constituant une touche, lequel rend plus facile la manoeuvre et donne une apparence plus esthétique à l'objet.

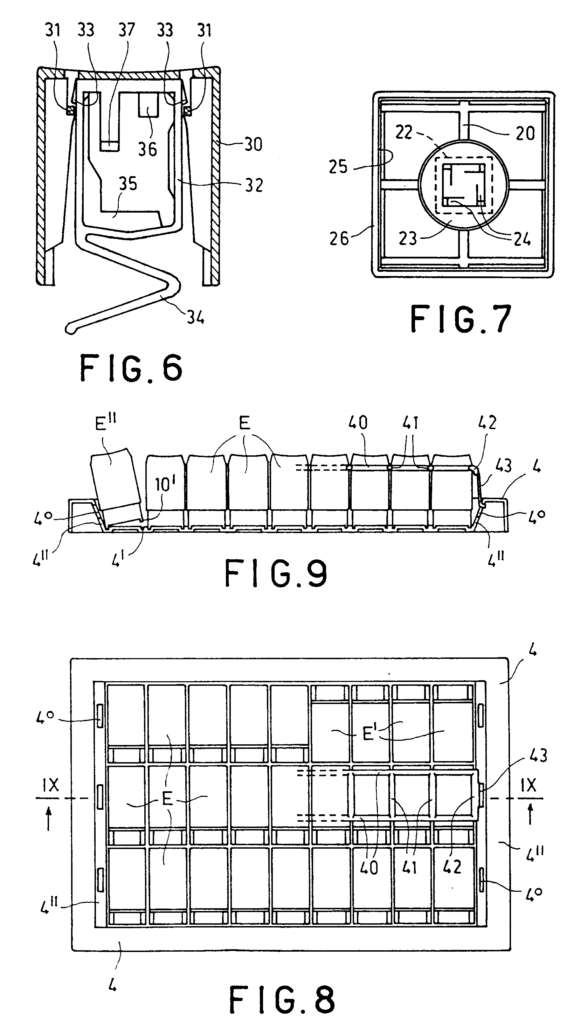

L'organe opératif intérieur (figure 6) est constitué par un cadre 32 pourvu d'ailettes 33 pour sa connexion aux oreilles 31, et il se termine inférieurement par une partie pliée 34 constituant un ressort lequel, s'appuyant sur la base 10 du support 1, pousse l'ensemble du poussoir 3 vers sa position de repos. Le cadre 32 comporte une saillie en équerre 35 qui, dans la position de repos du poussoir, coopère avec la section carrée 22 du corps prismatique 2 en empêchant sa rotation, tandis qu'il n'empêche pas cette rotation lorsque le poussoir est baissé. Le cadre 32 comporte encore une saillie d'arrêt 36 qui touche la section carrée 22 du corps prismatique 2 lorsque le poussoir 3 atteint sa position inférieure de fin de course. Enfin, le cadre 32 comporte un cliquet élastique 37 disposé de sorte à pouvoir coopérer, suite à la baisse du poussoir 3, avec la roue à échappement constituée par les saillies 24 du disque 23 du corps prismatique 2. L'organe opératif intérieur 32-37 est réalisé, de préférence, en une matière plastique moulée ayant des bonnes caractéristiques d'élasticité, qui sont requises par la partie 34 constituant un ressort et par le cliquet élastique 37.

Si les parties décrites sont conformées d'une façon appropriée, par exemple comme représenté dans les dessins, le couplage entre le cadre 32 du poussoir 3 et le disque 23 du corps prismatique 2 réalise aussi la double fonction d'empêcher le glissement non voulu du corps prismatique 2 hors de la partie cylindrique 12 du support 1, et d'empêcher le glissement non voulu du poussoir 3 hors du montant 11 du support 1.

De préférence, comme le montrent les figures 2 et 3, la base 10 se prolonge en direction longitudinale quelque peu au-delà des extrémités du corps prismatique 2 et du poussoir 3, de sorte à assurer une certaine distance entre des éléments ordonnés l'un après l'autre.

Le fonctionnement du mécanisme décrit est le suivant. Dans la position de repos du poussoir 3, déplacée vers le haut et retenue par le ressort 34, la saillie en équerre 35 du cadre 32, en engageant la section carrée 22 du corps prismatique 2, empêche toute rotation de ce dernier. L'élément se comporte comme un corps solide qui montre une représentation imprimée sur la face supérieure 2A du corps prismatique 2, et il peut être manipulé, en particulier en le composant avec d'autres éléments similaires, sans que la représentation montrée puisse être déplacée par accident.

Lorsqu'on désire changer la représentation montrée par l'élément, le poussoir 3 est baissé en le pressant contre l'action du ressort 34. Alors la saillie en équerre 35 n'empêche plus la rotation du corps prismatique 2, et cette rotation est produite, dans le sens de la flèche A de la figure 1, par le cliquet élastique 37 coopérant avec l'une des saillies 24 qui forment une roue à échappement. Quand la rotation ainsi produite atteint 1/4 de tour, la saillie d'arrêt 36 engage la section carrée 22 du corps prismatique 2 en arrêtant tout mouvement ultérieur de ce dernier et du poussoir 3. Le corps prismatique 2 est ainsi arrêté exactement en une position tournée d' 1/4 de tour par rapport à la précédente, et cela même s'il aurait tendance à poursuivre sa rotation par son propre inertie, comme il pourrait s'avérer si le poussoir 3 a été manoeuvré rapidement. Quand enfin la pression appliquée sur le poussoir 3 est relâchée, le ressort 34 provoque le retour du poussoir 3 à sa position de repos, et la saillie en équerre 35 engage à nouveau la section carrée 22 du corps prismatique 2, en bloquant ce dernier dans la nouvelle position atteinte. Pendant cette course de retour, le cliquet 37, grâce à son élasticité, peut se déformer pour surmonter la saillie 24 qui se trouve en correspondance de lui. Tout le mécanisme est ainsi revenu à la position de départ, et alors l'élément peut être laissé dans sa nouvelle condition, dans laquelle il montre une représentation différente de la précédente, ou bien une nouvelle pression peut être appliquée au poussoir 3 pour changer ultérieurement la représentation montrée par l'élément.

Un élément comme celui qu'on a décrit peut être utilisé singulièrement, mais de préférence il fait partie d'un ensemble d'éléments similaires comportant des représentations différentes, et ces éléments, après choix de la représentation montrée par chacun d'eux moyennant l'actionnement des poussoirs respectifs, peuvent être avoisinés l'un l'autre d'une manière appropriée pour composer une image ou une écriture. La possibilité de modifier l'image ou l'écriture est bien augmentée si l'élément lamellaire comportant les représentations est changeable, comme on l'a indiqué ci-dessus.

La composition peut être effectuée librement en appuyant les différents éléments sur une table, mais il est avantageux que la composition soit guidée en prévoyant un plateau 4 (figures 8 et 9), disposé pour pouvoir contenir un certain nombre d'éléments E disposés en ordre, par exemple sur trois lignes et neuf colonnes comme dans le cas représenté dans le dessin. Il est à propos que la surface du plateau soit pourvue de gorges 4', dans lesquelles peuvent être insérées des saillies inférieures 10' (Figure 4) dont sont pourvues les bases des éléments E contenus, de sorte à en établir la position. De plus, il est à propos que les bords latéraux 4'' du plateau 4 soient inclinés, de sorte à autoriser une oscillation latérale des éléments E (comme on l'a représenté dans la figure 9 pour l'élément E''), de sorte que la rotation des corps prismatiques 2 des éléments ne trove pas d'obstacles quand on actionne les poussoirs 3 respectifs. Comme on l'a représenté en E', certains éléments E peuvent être insérés dans le plateau en une position renversée par rapport aux éléments de la ligne qui se trouve au-dessous ou au-dessus, c'est à dire avec les poussoirs respectifs éloignés. Cela permet de disposer immédiatement adjacentes les représentations montrées par un groupe d'éléments, ainsi composant un cadre d'image qui n'est pas interrompu par la présence des poussoirs.

Ainsi procédant on peut composer des écritures, en utilisant des représentations de lettres et de numéros montrées par les éléments, ou bien des images, dont les parties sont constituées par les représentations des éléments singuliers, ou bien encore des figures complexes comportant des écritures et des images, tout cela en utilisant les représentations présentes sur les éléments ou bien en choisissant des éléments lamellaires comportant les représentations désirées et en les appliquant sur les éléments de l'ensemble.

Le nombre d'éléments faisant partie d'un ensemble peut correspondre au nombre d'éléments reçus par un plateau, ou bien on peut offrir au choix des éléments en nombre plus grand, dont une partie seulement peut être utilisée pour effectuer la composition dans le plateau. D'autre part, on peut introduire dans le plateau un nombre d'éléments inférieur d'une unité par rapport au nombre d'élément qu'on pourrait y mettre, ainsi laissant une place vide. On réalise alors la possibilité d'arriver à la composition désirée par des déplacements successifs des éléments adjacents à la place vide. On atteint ainsi un passe-temps similaire de certains passe-temps connus de ce genre, qui sont réalisés moyennant des éléments déplaçables par rapport à une place vide, mais qui n'offrent pas la possibilité de modifier la représentation montrée par les éléments.

Pour retenir les éléments E à leur place dans le plateau 4 pendant le transport ou l'exhibition pour la vente, on peut avantageusement utiliser des bandes de retenue, dont un tronçon est représenté dans la partie droite des figures 8 et 9. Ces bandes sont constituées par des éléments longitudinaux 40 connectés par des traverses 41 et par des éléments d'extrémité 42 pourvus de crochets de retenue 43. Ces bandes sont superposées aux lignes d'éléments E en passant sur leurs corps prismatiques, et les crochets d'extrémité sont engagés en des ouvertures correspondantes 4° prévues dans les bords inclinés 4'' du plateau 4.

Bien entendu, des différentes modifications peuvent être portées à ce qu'on a décrit et montré à titre d'exemple. Le corps prismatique 2 pourrait avoir une section triangulaire au lieu que carrée, en modifiant de conséquence le mécanisme, qui doit alors provoquer des rotations du corps prismatique d' 1/3 de tour, au lieu que d' 1/4 de tour, pour chaque actionnement du poussoir 3. Le mécanisme à cliquet et roue d'échappement pourrait être réalisé en forme différente de celle exposée. L'organe de commande pourrait avoir la forme d'un petit levier ou autre, au lieu que la forme d'un poussoir.

## Revendications

1. Elément (E) pour jeu didactique, du type capable de montrer plusieurs surfaces (2A,2B) comportant des représentations différentes, lesquelles peuvent éventuellement être combinées avec les représentations d'autres éléments similaires constituant un ensemble, dans le but de composer des écritures, des images ou similaires, cet élément comprenant un support (1), un corps géométrique (2) pivoté sur ledit support (1) et comportant sur ses surfaces (2A,2B) des représentations, et un organe de commande (3) comprenant un poussoir (30), porté par ledit support (1) et capable, lorsqu'il est manoeuvré, d'agir sur ledit corps géométrique (2) en lui imposant une rotation dans un sens (A) préfixé, sur un angle tel à remplacer chaque surface (2B) du corps géométrique (2) par la surface successive (2A), ledit support (1) comprenant une base d'appui (10), un montant (11) qui s'élève de ladite base (10) et qui sert comme guide pour ledit organe de commande (3), et une partie (12) cylindrique servant comme coussinet pour ledit corps géométrique (2), caractérisé en ce que ladite partie (12) est creuse, et en ce que ledit poussoir (30) est creux et inséré à glissement sur ledit montant (11) du support, et comporte des moyens de connexion (31) pour un organe (32-37) intérieur au poussoir (30) opérant sur le corps géométrique (2) et en ce que ledit corps géométrique (2) comporte une partie principale (20) prismatique, de section carrée, et se prolonge, d'un côté de ladite partie principale (20) de section carrée, par une partie substantiellement cylindrique (21), laquelle constitue un tourillon et se termine par des conformations (22-24) définissant une partie des éléments d'un mécanisme de commande de la dite rotation et comprenant dans cet ordre une partie (22) à section carrée et un disque (23) coaxiaux, ce disque présentant des saillies (24) sur lesquelles opère ledit organe (32-37) de telle manière que ce disque (23) constitue une roue à échappement.

2. Elément pour jeu didactique suivant la revendication 1, caractérisé en ce que ladite partie principale (20) de section carrée du corps prismatique (2) porte un élément lamellaire (25) constitué par un carton rectangulaire plié comportant les représentations (2A,2B) de l'élément, retenu en forme et en position convenables par un étui prismatique transparent (26) inséré sur l'élément lamellaire (25).

3. Elément pour jeu didactique suivant la revendication 2, caractérisé en ce que ledit étui prismatique transparent (26) est inséré sur la partie (20) de section carrée du corps prismatique (2) d'une manière démontable, de sorte à autoriser le remplacement de l'élément lamellaire (25).

4. Elément pour jeu didactique suivant la revendication 1, caractérisé en ce que ledit organe opératif intérieur (32-37) du poussoir (3) comporte un cadre (32) entourant le mécanisme de commande (22-24) dudit corps prismatique (2), et que ledit cadre (32) comprend des saillies (35) coopérant avec ladite section carrée (22) pour immobiliser le corps prismatique (2) lorsque le poussoir est en position de repos, une saillie d'arrêt (36) coopérant avec ladite section carrée (22) lorsque le poussoir (3) atteint le fin de sa course d'actionnement, un cliquet élastique (37) coopérant avec lesdites saillies (24) constituant une roue d'échappement, et une partie pliée (34) qui forme un ressort de retour pour le poussoir (3).

5. Elément pour jeu didactique suivant la revendication 4, caractérisé en ce que ledit cadre (32) de l'organe opératif intérieur du poussoir (3) et la partie d'extrémité interne (22-24) du corps prismatique (2) sont conditionnés de sorte que leur couplage prévient le glissement hors de position des deux parties.

6. Ensemble d'éléments pour jeu didactique suivant une quelconque des revendications précédentes, comprenant nombre desdits éléments (E) ainsi qu'un plateau (4) disposé pour contenir un nombre préétabli d'éléments (E) disposés en ordre par lignes et colonnes, caractérisé en ce que ledit plateau (4) est pourvu de gorges (4') capables de recevoir des saillies inférieures (10') des bases (10) des éléments (E) contenus, et de bords latéraux (4'') inclinés qui autorisent une inclinaison latérale des éléments (E) contenus.

7. Ensemble d'éléments pour jeu didactique suivant la revendication 6, caractérisé en ce qu'il comprend en outre des bandes destinées à retenir les éléments (E) à leur place dans le plateau (4), chaque bande comportant deux rubans longitudinaux (40) connectés par des traverses intemédiaires (41) et par des traverses d'extrémité (42) pourvus de crochets de retenue (43) susceptibles d'être accrochés en des ouvertures correspondantes (4°) prévues dans le plateau (4).

## Claims

1. An element (E) for a didactic play, of the type capable of showing several surfaces (2A,2B) carrying different representations, which may possibly be combined with the representations of other elements forming a set, in order to compose writings, images or the like, said element including a support (1), a geometrical body (2) pivoted on said support (1) and carrying on its surfaces (2A,2B) some representations, and a control member (3) comprising a push-button (30), carried by said support (1) and capable, when operated, of acting on said geometric body (2) by causing a rotation thereof in a pre-established direction (A), along an angle by which each surface (2B) of the geometric body (2) is replaced by the subsequent surface (2A), said support comprising a basis (10) for rest, a upright (11) which rises from said basis (10) and serves as a guide for said control member (3), and a cylindrical part (12) which serves as a bearing for said geometric body, characterized in that said part (12) is hollow; that said push-button (30) is hollow and it is slidingly inserted on said upright (11) of the support and has connection means (31) for a member (32-37) internal to the push-button (30) which acts onto the geometric body (2); and that said geometric body (2) has a prismatic main part (20) of square cross section, and it extends, on one side of said main part (20) of square cross section, in a substantially cylindrical part (21) which acts as a trunnion and terminates with conformations (22-24) defining part of the elements of a mechanism for actuating said rotation, comprising, in the order, a part (22) of square cross section and a coaxial disk (23), said disk having projections (24) on which acts said member (32-37), whereby said disk (23) defines an escapement wheel.

2. An element for a didactic play, as set forth in Claim 1, characterized in that said main part (20) of square cross section of the prismatic body (2) carries a sheet element (25) formed by a bent rectangular cardboard on which the representations (2A,2B) of the element are impressed, which is kept in correct form and position by a transparent prismatic case (26) slipped on the sheet element (25).

3. An element for a didactic play, as set forth in Claim 2, characterized in that said transparent prismatic case (26) is removably slipped on the part (20) of square cross section of the prismatic body (2), in order to allow replacing the sheet element (25).

4. An element for a didactic play, as set forth in Claim 1, characterized in that said inner operating element (32-37) of the push-button (3) comprises a frame (32) surrounding the control mechanism (22-24) of said prismatic body (2), and that said frame (32) has projections (35) cooperating with said square section (22) in order to stop the prismatic body (2) when the push-button is in its start position, has a stop projection (36) cooperating with said square section (22) when the push-button (3) attains the end of its operation stroke, and has an elastic pawl (37) cooperating with said projections (24) forming an escapement wheel, as well as a bent part (34) forming a return spring for the push-button (3).

5. An element for a didactic play, as set forth in Claim 4, characterized in that said frame (32) of the inner operating element of the push-button (3), and the inner end part (22-24) of the prismatic body (2), are shaped in such a manner that their mutual engagement prevents any unintentional slipping off of both said parts.

6. A set of elements for a didactic play, as set forth in any one of the foregoing Claims, comprising a number of said elements (E) and additionally comprising a tray (4), capable of containing a certain number of elements (E) ordered by lines and columns, characterized in that said tray (4) is provided with grooves (4') capable of receiving bottom projections (10') of the basis (10) of the contained elements (E), and with inclined side rims (4'') which allow an inclination of the contained elements (E).

7. A set of elements for a didactic play, as set forth in Claim 6, characterized in that it further comprises retainment strips intended to maintain the elements (E) in position in the tray (4), each strip comprising two longitudinal bands (40) connected by intermediate cross elements (41) and by end cross elements (42) provided with retainment hooks (43), suitable for being hooked in corresponding openings (4°) formed in the tray (4).

## Patentansprüche

1. Lernspielelement (E) mit mehreren, verschiedene Muster aufweisenden Flächen (2A,2B), die eventuell mit den Flächen weiterer ähnlicher, eine Gesamtheit bildender Elemente kombiniert werden können, um Schriften, Bilder o.dgl. zusammensusetzen, wobei dieses Lernspielelement einen Halter (1), einen geometrischen Körper (2), der an dem Kalter (1) angelenkt ist und dessen Flächen (2A,2B) Muster aufweisen, sowie ein eine Drucktaste (30) aufweisendes Betätigungsglied (3) umfasst, das am Halter (1) angebracht ist und bei Betätigung auf den geometrischen Körper (2) wirkt, um denselben in einer vorgegebenen Richtung (A) um einen solchen Winkel zu drehen, dass jede Fläche (2B) des geometrichen Körpers (2) durch die anschliessende Fläche (2A) abgelöst wird, wobei der Halter (1) eine Auflage (10), einen sich von der Auflage (10) erhebenden Ständer (11), der als Führung für das Betätigungsglied (3) dient, und einen zylinderförmigen Teil (12) aufweist, der als Lager für den geometrischen Körper (2) dient, dadurch gekennzeichnet, dass der Teil (12) hohl ist, dass der ebenfalls hohle Drucktaster (30) in dem Ständer (11) des Halters verschiebbar angeordnet ist und Verbindungsmittel (31) für ein im Inneren der Drucktaste (30) vorgesehenes Glied (32-37) besitzt, das auf den geometrischen Körper (2) wirkt, und dass der geometrische Körper (2) einen prismatischen Hauptteil (20) mit quadratischem Querschnitt aufweist und sich von einem Bereich des Hauptteils (20) mit quadratischem Querschnitt mit einem im wesentlichen zylinderförmigen Bereich (21) erstreckt, der als Zapfen dient und mit Gebilden (22-24) endet, die einen Teil der Elemente einer Steuereinrichtung der Drehbewehung definieren und in dieser Reihenfolge einen Teil (22) mit quadratischem Querschnitt und eine dazu koaxiale Scheibe (23) umfassen, wobei die Scheibe (23) Wülste (24) aufweist, auf die das Glied (32-37) so wirk, dass die Scheibe (23) als Hemmungsrad dient.

2. Lernspielelement nach Anspruch 1, dadurch gekennzeichnet, dass der Hauptteil (20) mit quadratischem Querschnitt des prismatischen Körpers (2) ein lamellenförmiges Element (25) trägt, das aus einem rechteckigen, gefaltetem Kartonstück besteht, das die Muster (2A,2B) des Lernspielements trägt und durch einen auf dem lamellenförmigen Element (25) eingesetzten, durchsichtigen, prismatischen Schutzumschlag (26) in der richtigen Form und in der richtigen Lage gehalten wird.

3. Lernspielelement nach Anspruch 2, dadurch gekennzeichnet, dass der auf dem Teil (20) mit quadratischem Querschnitt eingesetzte durchsichtige, prismatische Schutzumschlag (26) abgenommen werden kann, um das lamellenförmige Element (25) auszutauschen.

4. Lernspielelement nach Anspruch 1, dadurch gekennzeichnet, dass das im Inneren der Drucktaste (3) angeordnete Arbeitsglied (32-37) einen die Steuereinrichtung (22-24) des prismatischen Körpers (2) umgebenden Rahmen (32) aufweist, und dass der Rahmen (32) Wülste (35), die mit dem quadratischen Querschnitt (22) zusammenwirken, um jegliche Bewegung des prismatischen Körpers (2) zu verhindern, wenn sich die Drucktast in Ruhestellung befindet, einen Anschlagwulst (36), der mit dem quadratischen Querschnitt (22) zusammenwirkt, wenn die Drucktaste (3) am Ende ihres Betätigungsweges gelangt, eine elastiche Klinke (37), die mit den ein Hemmungsrad bildenden Wülsten (24) zusammenwirkt, und einen umgebogenen Teil (34) aufweist, der eine Ruckholfeder für die Drucktaste (3) bildet.

5. Lernspielelement nach Anspruch 4, dadurch gekennzeichnet, dass der Rahmen (32) des im Inneren der Drucktaste (3) angeordneten Arbeitsglieds und der innere Endteil (22-24) des prismatischen Körpers (2) so ausgebildet sind, dass ihre Verbindung ein ungewolltes Abziehen beider Teile verhindert.

6. Gesamtheit von Lernspielelementen nach irgendeinem der vorhergehenden Ansprüche, mit mehreren Lernspielelementen (E) sowie einem Tablett (4) zur Aufnahme einer vorgegebenen Anzahl in Zeilen und Spalten angeordneter Lernspielelemente (E), dadurch gekennzeichnet, dass das Tablett (4) Nuten (4') zur Aufnahme der unteren Wülste (10') der Auflagen (10) der darin enthaltenen Lernspielelemente (E), und geneigte Seitenkanten (4'') aufweist, die eine Neigung der enthaltenen Lernspielelemente (E) gestatten.

7. Gesamtheit von Lernspielelementen nach Anspruch 6, dadurch gekennzeichnet, dass sie ausserdem Streifen umfasst, die dazu bestimmt sind, die Lernspielelemente (E) in ihrer Lage im Tablett (4) zu halten, wobei jeder Streifen zwei Längsbänder (40) aufweist, die durch Mittelstege (41) und durch Endstege (42) miteinander verbunden sind, die mit Haltehaken (43) versehen sind, die in entsprechende, im Tablett (4) vorgesehene Öffnungen (4°) eingreifen.
